# EUROPÄISCHE PATENTSCHRIFT

(11) **EP 1 134 522 B1**
(45) Veröffentlichungstag und Bekanntmachung des Hinweises auf die Patenterteilung: **30.11.2005**
(21) Anmeldenummer: 00105569.8
(22) Anmeldetag: 16.03.2000
(51) Int. Cl.: F25D 13/06, F25D 25/04

(54) **Lebensmittelkühler und Verfahren zum Abkühlen von Lebensmitteln**
Food chiller and method for chilling food
Refroidisseur de denrées alimentaires et procédé de refroidissement de denrées alimentaires

(43) Veröffentlichungstag der Anmeldung: 19.09.2001
(73) Patentinhaber: AGA AKTIEBOLAG, 181 81 Lidingö (SE)
(72) Erfinder: Berghoff, Rudolf Erwin, Dr.-Ing., 59872 Meschede - Berge (DE); Pöpleu, Ulf Christian, Dipl.-Ing., 21220 Seevetal (DE)
(74) Vertreter: Kasseckert, Rainer

(56) Entgegenhaltungen:
- US-A- 1 998 431
- US-A- 2 254 420
- US-A- 2 582 789
- US-A- 3 952 540
- US-A- 6 009 719

## Beschreibung

Die Erfindung betrifft einen Lebensmittelkühler zum Abkühlen, insbesondere Tiefgefrieren, von als Formkörper ausgebildeten Lebensmitteln, mit einem Kälteraum und einem Transportband zum Hindurchfördern der Lebensmittel durch diesen Kälteraum, wobei dem Transportband Halteeinrichtungen zum definierten Positionieren der Formkörper auf dem Transportband zugeordnet sind.

Aus offenkundiger Vorbenutzung sind Lebensmittelkühler der eingangs genannten Art bekannt, bei denen tiefzugefrierende Lebensmittel auf ein Transportband aufgelegt und durch den Kälteraum hindurchgefördert werden. US-A-1,998,431 offenbart einen Lebensmittelkühler, der auf einem Transportband angeordnete Formen aufweist, in denen Fruchtsäfte, Eiscreme oder dergleichen zu einem festen Block gefroren werden sollen. US-A-2,254,420 offenbart einen Lebensmittelkühler gemäß dem Oberbegriff des Anspruchs 1. Bei diesem Kühler durchlaufen an Ketten aufgehängte Körbe einen Kälteraum. Die Körbe nehmen Truthähne oder dergleichen auf.

Der Erfindung liegt die Aufgabe zugrunde, einen Lebensmittelkühler gemäß dem Oberbegriff des Anspruchs 1 zu schaffen, in dem der Abkühlvorgang schneller und/oder effizienter abläuft.

Die Erfindung löst diese Aufgabe dadurch, daß die Halteeinrichtungen zum Halten von im wesentlichen flachen und/oder stabförmigen Lebensmitteln in einer geneigten bis aufrechten Position und mit einer Schmalseite auf dem Transportband aufliegend ausgebildet sind. Zunächst seien einige im Rahmen der Erfindung verwendete Begriffe erläutert.

Der Begriff "Abkühlen" kann einerseits die Abkühlung auf Temperaturen oberhalb des Gefrierpunkts bedeuten, bspw. die Abkühlung wärmebehandelter Produkte von bspw. +70°C auf +10°C. Abkühlen umfaßt insbesondere auch tiefgefrieren. Tiefgefrieren (frosten) bedeutet, daß die Lebensmittel für einen ausreichenden Zeitraum einem Kältemedium ausreichend niedriger Temperatur ausgesetzt sind, so daß im Anschluß an den Gefriervorgang eine Kerntemperatur deutlich unterhalb des Gefrierpunkts von Wasser vorliegt, in der Regel unterhalb von -18°C. Der Kühler wird dann als Froster bezeichnet.

Das Kältemedium kann beispielsweise tiefkaltes Gas oder mit Hilfe von Kompressionskältemaschinen abgekühlte Luft sein. Dabei kann der Wärmeaustausch ggf. durch Aufrechterhaltung eine Konvektionsströmung im Kälteraum mit Hilfe von Ventilatoren erhöht werden und die Abkühleffizienz verbessert werden. Es kann sich auch um ein ggf. verflüssigtes tiefkaltes Gas handeln, das direkt auf die Lebensmittelkörper aufgesprüht wird.

Formkörper im Sinne der Erfindung sind alle Lebensmittel, die entweder von vornherein eine vorgegebene und im Rahmen der bei Lebensmitteln üblichen Streuungen sich wiederholende äußere Gestalt haben oder aber die durch einen zerteilungs- oder Formvorgang in eine gewünschte Gestalt gebracht worden sind. Beispielhaft genannt seien Schnitzel oder sonstige vorzugsweise flache Fleischstücke, Fischfilets, Fischstäbchen und dergleichen. Besonders bevorzugt ist der erfindungsgemäße Lebensmittelkühler verwendbar für Lebensmittelformkörper, deren geringste Abmessung (Dicke) deutlich geringer ist als wenigstens eine der beiden übrigen Abmessungen in die anderen Raumrichtungen (Länge oder Breite), also entweder im wesentlichen flach oder aber stabförmig ausgebildete Formkörper.

Lebensmittel können bereits bei Temperaturen oberhalb einer bestimmten Temperatur, bspw. des Gefrierpunkts, als hinreichend formstabile Formkörper ausgebildet sein. Sie können bspw. aus einer homogenen, hinreichend festen Masse bestehen, bspw. ein festes Fleischstück. Sie können auch von einer heterogenen Mischung kleinerer Bestandteile, bspw. einer Gemüsemischung, gebildet werden, die mit Hilfe einer Bindesubstanz zusammengehalten wird. Bedeutend ist also nicht die Zusammensetzung eines Formkörpers, sondern lediglich die Eigenschaft hinreichender Formstabilität in einer räumlichen Anordnung des Formkörpers unter der Einwirkung der Schwerkraft. Umfaßt sind auch Lebensmittel, die bei Temperaturen bspw. oberhalb des Gefrierpunkts aus losen Bestandteilen bestehen oder bspw. aufgrund ihres Wassergehaltes nicht hinreichend formstabil sind (weiche Fleischstücke), jedoch bei Temperaturen unterhalb des Gefrierpunkts durch gefrorene Flüssigkeit zusammengehalten bzw. stabilisiert werden. Die Lebensmittelkörper sind in diesem Fall beim Eintritt in den Kälteraum bereits auf eine geeignete Temperatur vorgekühlt, zumindest im oberflächennahen Bereich. Käseprodukte sind bspw. bei Temperaturen von unterhalb +40°C formstabil. Sie sind daher in Anschluß an den Herstellungsprozeß, bei dem sie Temperaturen von oberhalb +40°C erreichen, entsprechend vorzukühlen. Umfaßt sind schließlich solche Lebensmittel, die selbst nicht formbeständig sind, bei denen jedoch die Formbeständigkeit durch eine Verpackung erzielt wird.

Definiertes Positionieren im Sinne der Erfindung bedeutet, daß die Formkörper auf dem Transportband eine räumliche Lage einnehmen, die durch die Halteeinrichtungen vorgegeben ist. Im Rahmen der Erfindung kann dies jede räumliche Lage sein, die von der zufälligen Lage, die ein Formkörper auf einem flachen Transportband ohne Halteeinrichtungen einnehmen würde, abweicht. Insbesondere ist vorgesehen, daß durch die erfindungsgemäß vorgesehene definierte Positionierung ein größerer Teil der Oberfläche des Formkörpers für das Kältemedium frei zugänglich ist, als wenn der Formkörper undefiniert auf dem Transportband aufläge. Bei den flachen oder stabförmigen Formkörpern sorgen die Halteeinrichtungen demnach dafür, daß die Formkörper im wesentlichen mit einer Schmalseite auf dem Band aufstehen, so daß der größte Teil ihrer Oberfläche für das Kältemedium frei zugänglich ist.

Beim Besprühen der Formkörper mit verflüssigtem tiefkalten Gas oder bei ihrem Umspülen mit einem gasförmigen Kältemedium hängt die Effizienz der Kälteübertragung und damit auch die Abkühlgeschwindigkeit direkt von der frei besprühbaren bzw. bespülbaren Fläche ab. Erfindungsgemäß wird derjenige Flächenanteil eines Formkörpers, der für das Kältemedium nicht direkt zugänglich ist, vorzugsweise deutlich vermindert.

Der Begriff "Transportband" hat im Rahmen der vorliegenden Erfindung eine verallgemeinerte Bedeutung. Es bezeichnet ein endlos umlaufendes Fördermittel zum Transport der Lebensmittel-Formkörper über eine vorgebene Transportstrecke. Es kann aus einem einheitlichen Band oder aus mehreren Gliedern bestehen. Das Transportband ist nicht auf geschlossene bzw. flächig ausgebildete Bänder beschränkt. Teilweise offene Ausführungen, bspw. aus dem Stand der Technik bekannte Kettenbänder, sind vorteilhaft, da sie die Zugänglichkeit der Unterseite der auf dem Band liegenden Lebensmittelkörper für das Kühlmedium verbessern. Das Transportband ist weiterhin nicht auf ein im Verhältnis zur Breite flaches Band beschränkt. Die Erstreckung des Transportbands senkrecht zur Transportrichtung und zur seitlichen Ausdehnung ist unter Umständen nicht geringer als die Breite des Bandes selbst. Hinsichtlich der Abmessungen des Transportbandes steht lediglich fest, daß die Bandlänge groß gegen die Breite und die Erstreckung senkrecht dazu sein soll. Das Transportband ist auch nicht auf bestimmte Materialien beschränkt. Es kann bspw. aus einem Kunststoffband bestehen, jedoch ebenfalls aus metallischen Kettengliedern zusammengesetzt sein. Die Länge des durch das Transportband vorgegebenen Transportweges ist ferner unabhängig von der Ausdehnung des Kälteraums. Bspw. kann sich das Transportband an einem oder beiden Enden über den Kälteraum hinaus fortsetzen; es kann auch sein, daß das Transportband an einem oder beiden Enden sich nicht bis zum Rand des Kälteraums erstreckt. Ferner ist die Orientierung des Transportbands nicht festgelegt. Während das Transportband in vielen Fällen waagerecht verlaufen wird, kann es unter Umständen auch geneigt sein, sofern es nur seine Transportfunktion erfüllen kann.

Der Kälteraum ist weder hinsichtlich seiner Form noch seiner Beschaffenheit beschränkt, sondern allein durch seine Funktion gekennzeichnet, ein Kältemedium einer ausreichend niedrigen Temperatur in einem räumlich begrenzten Bereich und/oder über einen gewissen Zeitraum zur Verfügung zu stellen. Im Fall der direkten Besprühung mit verflüssigtem Gas ist dies der vom aufzusprühenden Gas erfüllte Raum. Es ist in diesem Fall nicht einmal nötig, daß der Kälteraum durch Wände oder auf andere Weise materiell begrenzt ist. Es ist auch nicht gefordert, daß das Kältemedium über einen längeren Zeitraum ständig im Kälteraum zur Verfügung steht; insbesondere beim direkten Aufsprühen von tiefkaltem Gas kann dies auch stoßweise erfolgen. Allerdings kann ein durch Wände begrenzter Raum vorteilhaft sein, um die Kälteeinwirkung des Kältemediums zu verbessern, wobei auch Ventilatoren zur Aufrechterhaltung einer Zwangskonvektion Verwendung finden. In diesem Fall sind zweckmäßigerweise Eintritts- und Austrittsöffnungen (ggf. mit Kälteschleusen) zum Ein- und Ausfördern der Lebensmittelkörper in den bzw. aus dem Kühler in den Kühlerwänden vorgesehen.

Die Halteeinrichtungen sind gitter- oder bügelförmig, ansonsten aber weder hinsichtlich des Materials noch hinsichtlich ihrer Formung beschränkt, sondern ebenfalls allein durch ihre Haltefunktion definiert. Es kann sich daher um gegenständliche Einrichtungen, bspw. auf dem Transportband angebrachte Aufsätze oder darüber angeordnete Führungen handeln. Die Halteeinrichtungen können separate, am oder über dem Transportband angeordnete, ggf. daran befestigte Teile sein oder einstückig als Teil des Transportbandes selbst ausgeführt sein. Sie sind in geeigneter Weise beschaffen und angeordnet, um einen zu kühlenden Lebensmittelkörper auf dem Transportband in einer definierten Position zu halten. Darunter ist jede Position zu verstehen, die von der Position abweicht, die ein zu kühlender Lebensmittelkörper üblicherweise auf dem Transportband einnehmen würde, wenn die Halteeinrichtungen nicht vorhanden wären. "Üblicherweise" bedeutet dabei, daß prinzipiell mögliche, jedoch unwahrscheinliche Anordnungen außer Betracht zu lassen sind. Die üblicherweise eingenommene Position entspricht in der Regel derjenigen mit dem niedrigsten Schwerpunkt des Lebensmittelkörpers. Das Merkmal der "definierten Positionierung" bedeutet also nicht, daß die Orientierung der Formkörper relativ zum Transportband festgelegt ist, sondern die Position ist lediglich als abweichend von der Fiktivposition definiert, die normalerweise ohne Halteeinrichtungen eingenommen werden würde. Falls die Halteeinrichtungen oberhalb der Transportbandebene angeordnet sind, ist die Position eines gehaltenen Formkörpers durch einen erhöhten Schwerpunkt gegenüber demjenigen eines auf dem Transportband ohne Halteeinrichtungen liegenden Formkörpers definiert.

Die Erfindung hat erkannt, daß sich die Formkörper unter der Einwirkung der Schwerkraft auf einem Transportband ohne Halteeinrichtungen möglichst "flach" positionieren, d. h. daß sich die Richtungen der größten Erstreckung der Formkörper etwa parallel zur Transportbandebene erstrecken. Die übliche Position eines Quaders ist bspw. diejenige, bei welcher die kürzesten Quaderkanten senkrecht zur Transportbandebene orientiert sind. Im folgenden wird die Richtung der längsten Erstreckung des Formkörpers als "Länge" bezeichnet. Die "Breite" ist diejenige Richtung senkrecht zur Längsrichtung mit der größten Erstreckung. Die "Dicke" bezeichnet die auf der Längsrichtung und der Breite senkrechten Richtung. Ein Quader liegt also üblicherweise der Länge und Breite nach auf einem Transportband.

Infolge der weitestgehend "flachen" Massenverteilung des Formkörpers in der Position ohne Halteeinrichtungen bildet die dem Transportband zugewandte Unterseite der Formkörper eine besonders große Fläche. Dies ist nachteilig, da die dem Transportband zugewandte Oberfläche des Formkörpers für das Kühlmittel schlechter oder gar nicht zugänglich ist, weiterhin wegen des vergleichsweise großen Platzbedarfs des Formkörpers auf dem Transportband. Mit Hilfe der erfindungsgemäßen Halteeinrichtungen werden die Formkörper dagegen in einer von dieser ungünstigen Position abweichenden Position gehalten, wodurch die genannten Nachteile mindestens teilweise vermieden werden können. Denn da die dem Transportband zugewandte Fläche in der üblichen Position ohne Halteeinrichtungen maximal ist, führt jede davon abweichende Positionierung durch die erfindungsgemäßen Halteeinrichtungen notwendigerweise zu einer Verringerung der dem Transportband zugewandten Fläche eines Formkörpers und damit verbunden zu einer Erhöhung der Einwirkungsfläche für das Kältemedium und einer entsprechenden Platzersparnis.

Die vergrößerte dem Kältemedium zugängliche Oberfläche führt bei gleicher Baulänge direkt zu einer Effizienzsteigerung, da die notwendige Verweilzeit der Formkörper im Kälteraum reduziert ist. Demnach kann die Fördergeschwindigkeit erhöht werden, was unmittelbar zu einer Erhöhung der Durchsatzrate führt. Alternativ kann die Fördergeschwindigkeit konstant gehalten werden und die Baulänge entsprechend verkürzt werden. Es ist auch möglich, sowohl die Durchsatzrate um ein geringeres Maß zu erhöhen und gleichzeitig die Baulänge um ein entsprechendes Maß zu reduzieren. Schließlich kann es auch erwünscht sein, Baulänge, Fördergeschwindigkeit und damit die Verweildauer der Formkörper im Kühlraum konstant zu halten. Die verbesserte Abkühleffizienz kann dann bspw. zu einer Temperaturabsenkung des Kältemediums verwendet werden, und zwar soweit, daß das Abkühlergebnis demjenigen eines herkömmlichen Kühlers ohne Halteeinrichtungen entspricht. Damit verbunden ist eine Energie- und damit Kostenersparnis.

Die Reduzierung der von den Formkörpern in der Transportbandebene eingenommenen Fläche kann insbesondere dazu verwendet werden, die Formkörper auf dem Transportband dichter anzuordnen. Hierdurch ergibt sich bei konstanter Fördergeschwindigkeit eine Erhöhung der Durchsatzrate. In analoger Weise kann anstelle dessen oder in Kombination damit eine verkürzte Baulänge bzw. ein reduzierter Energiebedarf des Kühlers bzw. Frosters erreicht werden.

Bei einem im wesentlichen flachen Lebensmittel ist die Länge einer sog. Langseite um ein vielfaches größer als die Dicke, in der Regel mindestens das vierfache, sechsfache oder achtfache davon. "Im wesentlichen" bedeutet dabei, daß es an einzelnen Stellen Abweichungen von der flachen Form geben kann, ohne daß dadurch ein insgesamt flacher Charakter vollkommen verloren ginge. Die Breite der flachen Lebensmittel liegt zwischen der Länge und der Dicke. Bei einer der Dicke ungefähr entsprechenden Breite ist das Lebensmittel im wesentlichen stabförmig. Im folgenden schließt die Diskussion flacher Lebensmittel die stabförmigen Lebensmittel ein.

Bevorzugt erfolgt der Transport der Formkörper mit einer Langseite entweder quer oder parallel zur Transportrichtung ausgerichtet. Bei einem Transport mit einer Langseite quer zur Transportrichtung sind die stützenden Teile der Halteeinrichtungen im wesentlichen quer zur Transportrichtung angeordnet und zweckmäßigerweise am Transportband befestigt. Je nach Abmessungen von Transportband und Formkörpern können mehrere derselben nebeneinander transportiert werden.

Bei einem Transport mit einer Langseite parallel zur Transportrichtung sind die Halteeinrichtungen bzw. deren stützende Teile im wesentlichen ebenfalls parallel zur Transportrichtung angeordnet. Sie können dabei am Transportband befestigt sein und mitgefördert werden. Vorteilhafterweise handelt es sich in diesem Fall jedoch um oberhalb des Transportbands angeordnete, feststehende Halteeinrichtungen, die sich über die gesamte Transportstrecke erstrecken. Diese Anordnung weist den Vorteil auf, daß eine Befestigung der Halteeinrichtungen am Transportband entfallen kann. Die Förderkraft wird in diesem Fall von der Reibung zwischen Formkörpern und Transportband erzeugt. Vorteilhafterweise sind eine Mehrzahl von derartigen Halteeinrichtungen parallel zueinander angeordnet, um die Förderkapazität entsprechend zu erhöhen. Bspw. kann mittels entsprechender Gitter eine Mehrzahl von über dem Transportband angeordneten, parallel zur Förderrichtung angeordneten Führungskanälen gebildet werden, durch die mehrere Reihen von Formkörpern nebeneinander hochkant (mit einer Schmalseite auf dem Transportband aufliegend) hindurchgefördert werden.

Die Halteeinrichtungen sind so gestaltet und angeordnet, daß die flachen Formkörper mit ihrer Hilfe in einer geneigten bis aufrechten Position gehalten werden können. Die Neigung bezieht sich bei flachen Formkörpern auf den Winkel, den die der Länge und Breite nach aufgespannte Fläche mit der Transportbandebene einschließt. Bei stabförmigen Lebensmitteln ist dies der Winkel zwischen der Stabachse und der Transportbandebene. Dieser Winkel beträgt erfindungsgemäß mindestens 45°, vorzugsweise mindestens 60° und weiter vorzugsweise mindestens 75° bis zu 90°. Die Unterseite wird dann durch eine der Schmalseiten gebildet, wobei die Längsschmalseite aus Stabilitätsgründen häufig zu bevorzugen sein wird. Es ergibt sich, daß bei flachen Lebensmitteln eine Platzersparnis und damit Effizienzsteigerung bis zu einem Faktor möglich ist, der durch das Verhältnis von Breite (bzw. Länge) zu Dicke gegeben ist. Die Platzeinsparung wird in der Praxis durch die Dicke der Halteeinrichtungen sowie durch einen gewissen Spielraum zwischen Halteeinrichtungen und Formkörpern begrenzt.

Um die verringerte Fläche der Formkörper auszunutzen und eine Platzersparnis herbeizuführen, sind die Halteeinrichtungen mit einem gegenseitigen Abstand angeordnet, der geringer ist als die mittlere Ausdehnung eines Formkörpers. Bei im wesentlichen flachen Formkörpern entspricht der gegenseitige Abstand vorteilhafterweise deren Dicke zuzüglich einem Spielraum, der 5 cm betragen kann, häufig jedoch geringer als 3 cm oder 5 mm sein wird. Durch die eng aneinanderliegende Anordnung der Halteeinrichtungen wird die Platzersparnis verbessert. Dies betrifft sowohl quer als auch parallel zur Transportrichtung angeordnete Halteeinrichtungen.

Die Halteeinrichtungen sind möglichst offen ausgeführt, d. h. weitgehend durchlässig für das Kältemedium. Je offener dabei die Halteeinrichtungen im Vergleich zum Transportband sind, desto größer ist die durch die erhöhte dem Kältemedium zugängliche Oberfläche bewirkte Steigerung der Abkühleffizienz. Denkbar sind bspw. gitterförmige Halteeinrichtungen, die quer oder parallel zur Transportrichtung angeordnet sind. Die Formkörper werden positioniert, indem sie mindestens teilweise am Gitter oder, bei geneigter Orientierung, darauf aufliegen. Die Durchlässigkeit des Gitters kann durch Vergrößerung der Gittermaschen verbessert werden, und zwar bis zu einer Maschengröße im Bereich der Länge oder Breite des Formkörpers. Die Halteeinrichtungen sind dem Transportband zugeordnet. Dies bedeutet, daß sie eine definierte räumliche Anordnung relativ zum Transportband aufweisen. Im Rahmen der Erfindung können die Halteeinrichtungen an dem Transportband befestigt sein und mit diesem mitlaufen, alternativ können sie feststehend bspw. über dem Transportband angeordnet sein und sich in Förderrichtung des Bandes erstreckende Führungskanäle bilden, durch die die Formkörper hindurchlaufen.

Eine Halteeinrichtung kann auch aus einer zweckmäßig angeordneten Mehrzahl von Haltebügeln bestehen, wobei die Übergänge zur Gitterform fließend sind. Zur Erfüllung der Positionierfunktion kann unter Umständen ein einzelner etwa horizontaler Haltebügel quer oder parallel zur Förderrichtung ausreichen. Die Begriffe "horizontal" und "vertikal" beziehen sich hier und im folgenden auf die Transportbandebene. Zweckmäßigerweise ist dieser Haltebügel zum Stützen der Formkörper in einem Bereich geeignet, der einen Abstand vom tiefstgelegenen Punkt des gehaltenen Formkörpers aufweist, der 50 bis 100 %, vorzugsweise 60 bis 75 % der Formkörperbreite entspricht (bzw. der Formkörperhöhe, falls die Unterseite der positionierten Formkörper die kurze Schmalseite ist). Der genannte Abstand soll aus Stabilitätsgründen einerseits nicht zu niedrig sein, insbesondere der obere Abstützpunkt nicht unterhalb des Schwerpunkts liegen. Andererseits soll ein hinreichender Sicherheitsabstand zur Oberkante der positionierten Formkörper bestehen. Im unteren Bereich können die Formkörper mit Hilfe von Halteeinrichtungen, bspw. eines etwa horizontalen Haltebügels, zusätzlich abgestützt werden. Dazwischen können weitere etwa horizontale Haltebügel vorgesehen sein, bspw. um bei einem nicht vollständig formstabilen Lebensmittelkörper ein Durchhängen oder Durchrutschen zu verhindern. Die horizontalen Haltebügel werden zweckmäßigerweise durch vertikale Bügel gehalten, die ggf. am Transportband befestigt sein können.

Bei im wesentlichen quer zur Transportrichtung angeordneten Halteeinrichtungen können seitliche Halteteile vorgesehen sein, die ein seitliches Herauswandern der Formkörper verhindern. Diese Teile können ebenfalls gitter- oder bügelförmig sein. Die seitlichen Halteteile können insbesondere bei runden Formkörpern, bspw. Reibekuchen, zweckmäßig sein. In dieser Ausformung bilden die Halteeinrichtungen Fächer zur Aufnahme der Lebensmittelkörper.

Wie bereits erwähnt, umfaßt der Begriff "Formkörper" auch solche Lebensmittel, welche bei Temperaturen oberhalb einer bestimmten Temperatur (bspw. des Gefrierpunkts) nicht die vorausgesetzte Formbeständigkeit aufweisen, sei es, daß sie zu weich sind, sei es, daß sie aus nur lose zusammengehaltenen einzelnen Bestandteilen bestehen. In diesem Fall ist es zweckmäßig, am Eintrittsende des Kälteraums eine Vorkühlstufe vorzusehen, in der die Lebensmittel zur Erzeugung der gewünschten Formbeständigkeit entsprechend vorgekühlt werden, z. B. auf eine Temperatur knapp unterhalb der Formbeständigkeitstemperatur. Dabei kann ein teilweises Abkühlen bzw. Gefrieren der Lebensmittel bspw. in ihrem oberflächennahen Bereich bereits ausreichen. Die Vorkühlstufe ist nicht auf eine unmittelbar zum Kühlraum benachbarte Anordnung beschränkt. Bspw. kann zwischen beiden Kühlräumen eine weitere Transportstrecke angeordnet sein. Wesentlich ist lediglich, daß die Vorkühlung der Kühlung im Kälteraum zeitlich vorgelagert ist und die Lebensmittelkörper beim Eintritt in den Kälteraum hinreichend formbeständig sind.

Gegenstand der Erfindung ist ferner ein Verfahren zum Abkühlen, insbesondere Tiefgefrieren, von als Formkörper 3 ausgebildeten, im wesentlichen flachen und/oder stabförmigen Lebensmitteln in einem erfindungsgemäßen Lebensmittelkühler, dadurch gekennzeichnet, daß man die Formkörper in die Halteeinrichtungen in einer um mindestens 45° geneigten bis aufrechten Position relativ zum Transportband einbringt und durch den Kälteraum hindurchfördert.
Das Verfahren zeichnet sich somit dadurch aus, daß der Abstand der Halteeinrichtungen an die Dicke der zu frostenden Formkörper angepaßt ist und somit ein großer Teil der Oberfläche der Formkörper dem Kältemedium im Kälteraum ausgesetzt ist.

Die Erfindung wird im folgenden anhand vorteilhafter Ausführungsbeispiele mit Bezug auf die Figuren erläutert. Es zeigen:
- Fig. 1:: eine schematische Seitenansicht eines Lebensmittelkühlers;
- Fig. 2:: eine Ansicht einer am Transportband befestigten Halteeinrichtung aus der Transportrichtung;
- Fig. 3:: eine Seitenansicht einer am Transportband befestigten Halteeinrichtung;
- Fig. 4:: einen Lebensmittelkühlers mit Vorkühlstufe.

Ein Lebensmittelkühler umfaßt einen Kälteraum 1, in dem ein Transportband 2 zum Hindurchfördern von Lebensmittel-Formkörpern 3 durch den Kälteraum angeordnet ist. Im Innern des Kälteraums 1 sind nicht gezeigte Kälteerzeugungseinrichtungen vorgesehen, die innerhalb des Kälteraums 1 oder mindestens in dem von den Lebensmittelkörpern 3 durchlaufenen Bereich ein Kältemedium, im einfachsten Fall Luft, mit einer zum Tiefgefrieren der Lebensmittelkörper ausreichend niedrigen Temperatur erzeugen. Die Lebensmittelkörper 3 treten an der Eintrittsseite 4 des Kälteraums mit einer Anfangstemperatur bspw. im Bereich von +5°C bis +20°C ein, wobei die Eintrittstemperatur auch wesentlich höher (bis zu 80 °C) oder knapp unterhalb des Gefrierpunkts (bis -4°C) liegen kann. Die Kühlleistung, die Länge des Transportwegs im Kälteraum L und Fördergeschwindigkeit des Transportbandes 2 sind so bemessen, daß die Lebensmittelkörper 3 den Kälteraum 1 an der Austrittsseite 5 in gekühltem, bspw. tiefgefrorenem Zustand, d. h. mit einer Kerntemperatur von bspw. -18°C oder darunter, verlassen. Das Transportband 2 ist als Kettenband ausgeführt, welches teilweise für das Kältemedium durchlässig ist. Bei kryogener Frostung durch direktes Aufsprühen eines tiefkalten verflüssigten Gases sind Sprühdüsen oberhalb der Transportbandebene E und vorzugsweise auch unterhalb davon angeordnet. Sowohl bei der Kälteerzeugung durch Kompressionskältemaschinen als auch bei kryogener Frostung können vorteilhafterweise nicht gezeigte Ventilatoren zur Aufrechterhaltung einer Konvektion innerhalb des Kälteraums 1 vorgesehen sein, welche den Wärmeaustausch beschleunigen und die Gefriereffizienz erhöhen.

Bei den Lebensmittelkörpern 3 handelt es sich um flache Formkörper, bspw. Schweineschnitzel, die bereits vor dem Eintritt in den Kälteraum 1 eine hinreichende Formstabilität aufweisen. Sie besitzen im genannten Beispiel Abmessungen von ca. 120 mm x 80 mm x 15 mm.

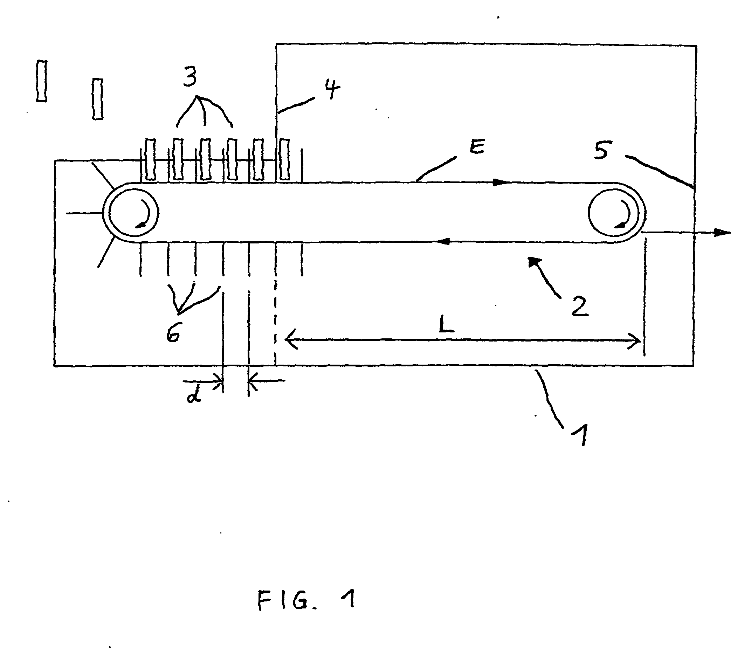

Am Transportband 2 sind Haltegitter 6 in regelmäßigem Abstand befestigt. Wie aus Fig. 1 ersichtlich, halten sie die Formkörper 3 in einer im wesentlichen aufrechten Position, bei der ihre Unterseite durch die längere Schmalseite (120 mm x 15 mm) gebildet wird. Die Formkörper 3 sind quer zur Transportrichtung orientiert und erstrecken sich vertikal um ihre Breite von 80 mm oberhalb der Transportbandebene E. Die mit Hilfe der Haltegitter 6 erzielte Positionierung der Formkörper 3 weicht von der Position ab, welche die Formkörper ohne die Halteeinrichtungen 6 einnehmen würden, nämlich einer flach liegenden Position, bei der sich die Formkörper 3 lediglich um ihre Dicke von 15 mm oberhalb der Transportbandebene E erstrecken würden. Bei einer Anordnung quer zur Transportrichtung würde sich jeder Formkörper in Transportrichtung um 80 mm erstrecken, was mehr als fünfmal so viel ist wie die entsprechende Erstreckung der Formkörper 3 in der aufrechten Position.

Die Haltegitter 6 sind entlang dem Transportband 2 mit einem gegenseitigen Abstand d von 25 mm angeordnet. Dies entspricht der Dicke der flachen Formkörper 3 von 15 mm zuzüglich einem Spielraum von 10 mm. Der Abstand d ist damit wesentlich geringer als mittlere Ausdehnung von 65 mm der Formkörper 3 (die mittlere Ausdehnung ist durch den Durchmesser einer Kugel gleichen Volumens gegeben). Der Abstand d ist zu vergleichen mit der oben genannten Erstreckung der Formkörper 3 in Transportrichtung ohne die Haltegitter 6 (80 mm) zuzüglich einem gegenseitigen Abstand von ca. 20 mm. Auf derselben Transportstrecke können daher mit Hilfe der Haltegitter 6 mehr als viermal so viele Formkörper 3 quer zur Transportrichtung positioniert werden wie bei einer entsprechenden Anordnung ohne Haltegitter 6. Bei gleicher Transportweglänge L und unveränderte Fördergeschwindigkeit erhöht sich damit die Durchsatzrate der Formkörper 3 durch den Froster um denselben Faktor. Alternativ kann die Kapazitätssteigerung zu einer Reduzierung der Transportlänge L und/oder einer Reduzierung des Energieaufwands verwendet werden, wie in der Beschreibungseinleitung erläutert wurde.

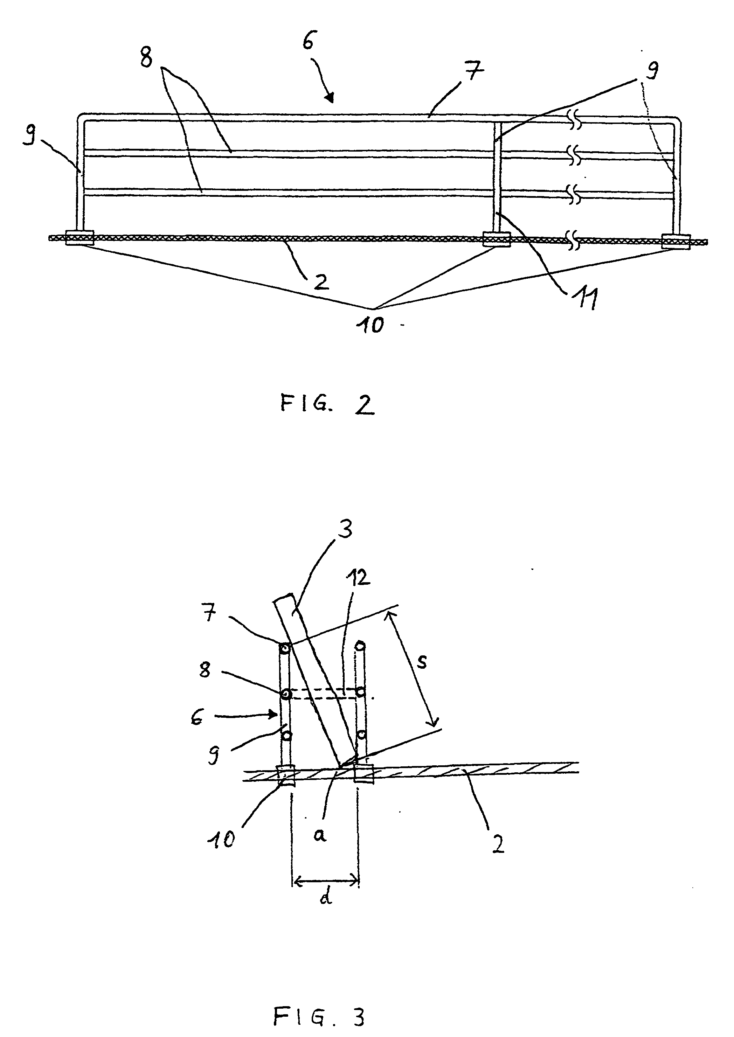

Wie aus Fig. 2 ersichtlich, sind die Halteeinrichtungen 6 gitterförmig, wobei die Größe der Gittermaschen sowohl in vertikaler als auch in horizontaler Richtung dem 0,2- bis 0,5 fachen, vorzugsweise dem 0,3- bis 0,4fachen der Breite bzw. Länge der Formkörper 3 entspricht. Das Haltegitter 6 wird durch eine Mehrzahl von miteinander verbundenen Bügeln bspw. aus Edelstahl gebildet. Eine Halteeinrichtung 6 umfaßt einen Haltebügel 7, der sich horizontal quer zur Transportrichtung erstreckt. Wie aus Fig. 3 ersichtlich, sind diese Haltebügel 7 zum Stützen der Formkörper 3 an einem Punkt geeignet, der einen Abstand s vom tiefstgelegenen Punkt a der Formkörper aufweist, der etwa 70 % der Formkörperbreite entspricht. Dadurch wird der Formkörper 3 im oberen Bereich sicher gestützt. Die Stützung am unteren Ende kann bspw. durch Reibschluß mit dem Transportband 2 oder durch Abstützen an einem der Bügel des benachbarten Haltegitters 6 erfolgen. Unterhalb des Stützbügels 7 können weitere horizontale Bügel 8 vorgesehen sein, welche zur Erhöhung der Stabilität dienen und/oder bei nicht vollständig formstabilen Lebensmittelkörpern ein Durchhängen bzw. Durchrutschen unterhalb des Abstützbügels 7 verhindern. Die horizontalen Haltebügel 7, 8 sind an zwei oder mehr vertikalen Haltebügeln 9 befestigt, die wiederum bei 10 am Transportband 2 befestigt sind. Die das Haltegitter 6 bildenden Bügel 7, 8, 9 haben eine Dicke, die gering ist im Vergleich zur Formkörperdicke. Sie kann im vorliegenden Beispiel im Bereich von 3 bis 4 mm liegen. Die vertikalen Haltebügel 9, insbesondere ein zwischen den äußeren Bügeln angeordneter Bügel 11, kann insbesondere auch zur Abstützung der Formkörper 3 im unteren Bereich beitragen.

Wie in Fig. 3 mit Hilfe gestrichelter Linien angedeutet, kann eine seitliche Verstrebung 12 der Haltegitter 6 vorgesehen sein, um ein Herausrutschen bzw. -wandern der Formkörper 3 zu unterbinden. Durch die seitlichen Haltebügel oder -gitter 12 erhalten die Halteeinrichtungen 6, 12 insgesamt die Form von Fächern zur Aufnahme der Formkörper 3.

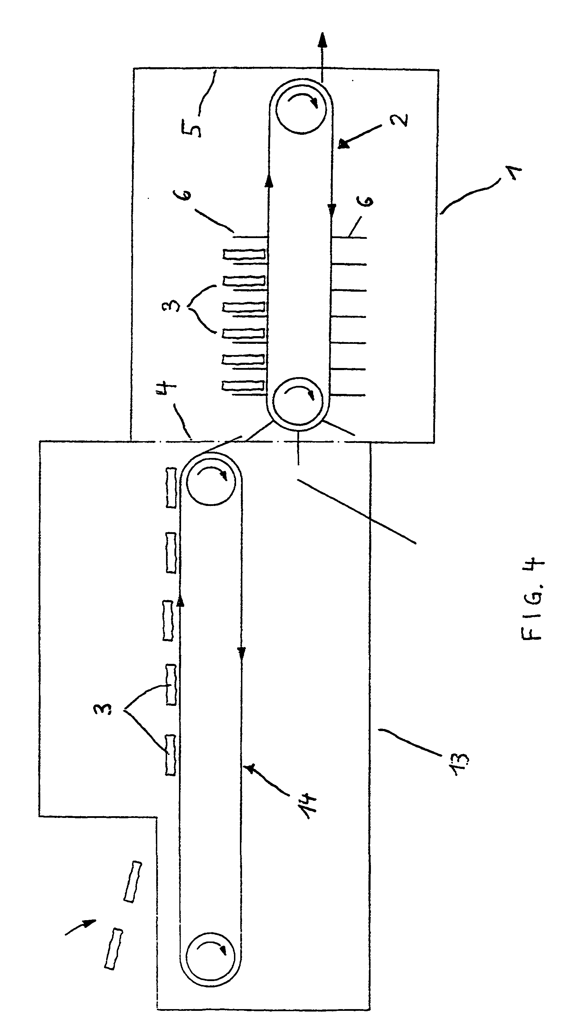

Falls die Lebensmittelkörper 3 von Natur aus oder infolge des Produktionsprozesses nicht ohne weiteres formbeständig sind, ist am Eintrittsende 4 des Kälteraums 1 zweckmäßigerweise eine Vorkühlstufe 13 zum Vorkühlen bzw. -gefrieren der Lebensmittelkörper 3 angeordnet. Dabei kann es sich um einen weiteren Kälteraum 13 und ein darin angeordnetes Transportband 14 handeln, auf dem die Lebensmittelkörper 3 flach liegend durch den Kälteraum 13 geführt werden, wobei durch das Vorkühlen der Formkörper 3 mindestens im äußeren Bereich eine hinreichende Formstabilität erzielt wird. Beim Eintritt in den Kälteraum 1 werden die Formkörper in die durch die Haltegitter 6 gebildeten Zwischenräume eingefüllt und behalten ihre Form in der aufrecht stehenden Position beim Transport durch den Kälteraum 1 bei. Im Beispiel der Fig. 4 ist die Fördergeschwindigkeit des Transportbands 14 aufgrund der flach liegenden Anordnung der Lebensmittelkörper 3 im Kühlraum 13 wesentlich höher als die Fördergeschwindigkeit des Transportbands 2.

## Patentansprüche

1. Lebensmittelkühler zum Abkühlen, insbesondere Tiefgefrieren, von als Formkörper ausgebildeten Lebensmitteln (3), mit einem Kälteraum (1) und einem Transportband (2) zum Hindurchfördern der Lebensmittel durch diesen Kälteraum (1), wobei dem Transportband (2) Halteeinrichtungen (6) zum definierten Positionieren der Formkörper (3) auf dem Transportband (2) zugeordnet sind,
wobei die Halteeinrichtungen (6) gitterförmig sind und/oder mindestens einen Haltebügel (7, 8) umfassen, der sich etwa quer oder parallel zur Förderrichtung des Transportbands erstreckt,
**dadurch gekennzeichnet, daß** die Halteeinrichtungen (6) zum Halten von im wesentlichen flachen und/oder stabförmigen Lebensmitteln (3) in einer um mindestens 45° geneigten bis aufrechten Position und mit einer Schmalseite auf dem Transportband aufliegend ausgebildet sind.

2. Lebensmittelkühler nach Anspruch 1, **dadurch gekennzeichnet, daß** die Halteeinrichtungen (6) in einem Abstand voneinander angeordnet sind, der geringer ist als die mittlere Ausdehnung eines zu frostenden Formkörpers (3).

3. Lebensmittelkühler nach einem der Ansprüche 1 oder 2, **dadurch gekennzeichnet, daß** die Halteeinrichtungen (6) in einem Abstand voneinander angeordnet sind, der der Dicke eines zu frostenden Formkörpers (3) zuzüglich einem Abstand von höchstens 5 cm, vorzugsweise höchstens 3 cm, vorzugsweise höchstens 0,5 cm entspricht.

4. Lebensmittelkühler nach einem der Ansprüche 1 bis 3, **dadurch gekennzeichnet, daß** die Halteeinrichtungen (6) zum Abstützen der Formkörper (3) in einem Bereich geeignet sind, der einen Abstand vom tiefstgelegenen Punkt der Formkörper aufweist, der 50 bis 100 %, vorzugsweise 60 bis 75 % der Formkörperbreite bzw. -höhe entspricht.

5. Lebensmittelkühler nach einem der Ansprüche 1 bis 4, **dadurch gekennzeichnet, daß** die Halteeinrichtungen (6,12) Fächer zur Aufnahme der Lebensmittelkörper aufweisen.

6. Lebensmittelkühler nach einem der Ansprüche 1 bis 5, **dadurch gekennzeichnet, daß** eine Vorkühlstufe (13) zum Vorkühlen oder -gefrieren der Lebensmittelkörper (3) vorgesehen ist.

7. Verfahren zum Abkühlen, insbesondere Tiefgefrieren, von als Formkörper (3) ausgebildeten, im wesentlichen flachen und/oder stabförmigen Lebensmitteln in einem Lebensmittelkühler nach einem der Ansprüche 1 bis 6, **dadurch gekennzeichnet, daß** man die Formkörper (3) in die Halteeinrichtungen (6) in einer um mindestens 45° geneigten bis aufrechten Position relativ zum Transportband (2) einbringt und durch den Kälteraum (1) hindurchfördert.

8. Verfahren nach Anspruch 7, **dadurch gekennzeichnet, daß** die Formkörper (3) bereits vor dem Eintritt in den Kälteraum (1) eine hinreichende Formstabilität aufweisen.

## Claims

1. Food chiller for chilling, in particular deep-freezing, food products (3) in the form of shaped bodies, having a refrigeration space (1) and a conveyor belt (2) for passing the food products through this refrigeration space (1), the conveyor belt (2) being assigned holding devices (6) for positioning the shaped bodies (3) in a defined way on the conveyor belt (2), the holding devices (6) being in grid form and/or comprising at least one holding clip (7, 8) which extends approximately transversely or parallel to the conveying direction of the conveyor belt, **characterized in that** the holding devices (6) are designed to hold substantially flat and/or rod-shaped food products (3) in a position which is inclined by at least 45° up to a vertical position, with a narrow side resting on the conveyor belt.

2. Food chiller according to Claim 1, **characterized in that** the holding devices (6) are arranged at a distance from one another which is less than the mean extent of a shaped body (3) that is to be frozen.

3. Food chiller according to either of Claims 1 and 2, **characterized in that** the holding devices (6) are arranged at a distance from one another which corresponds to the thickness of a shaped body (3) that is to be frozen plus a distance of at most 5 cm, preferably at most 3 cm, preferably at most 0.5 cm.

4. Food chiller according to one of Claims 1 to 3, **characterized in that** the holding devices (6) are suitable for supporting the shaped bodies (3) over a region which is at a distance corresponding to 50 to 100%, preferably 60 to 75%, of the shaped body width or height, from the lowest point of the shaped bodies.

5. Food chiller according to one of claims 1 to 4, **characterized in that** the holding devices (6,12) have compartments for accommodating the food products.

6. Food chiller according to one of Claims 1 to 6, **characterized in that** there is a precooling stage (13) for precooling or prefreezing the food products (3).

7. Method for chilling, in particular deep-freezing, food products in the form of shaped bodies (3), in particular are flat and/or rod-shaped, in a food chiller according to one of Claims 1 to 6, **characterized in that** the shaped bodies (3) are introduced into the holding devices (6) in a position which is inclined by at least 45° up to a vertical position relative to the conveyor belt (2) and the shaped bodies are conveyed through the refrigeration space (1) in this position.

8. Method according to Claim 7, **characterized in that** the shaped bodies (3) are sufficiently dimensionally stable even before they enter the refrigeration space (1).

## Revendications

1. Refroidisseur de denrées alimentaires pour refroidir, notamment pour surgeler des denrées alimentaires sous forme de corps moulés (3), comprenant une enceinte frigorifique (1) et une bande transporteuse (2) pour le transport des denrées alimentaires à travers cette enceinte frigorifique (1), des dispositifs de fixation (6) pour un positionnement des corps moulés (3) sur la bande transporteuse (2) étant associés à la bande transporteuse (2), les dispositifs de fixation (6) étant en forme de grille et/ou comprenant au moins un arceau de fixation (7, 8), qui s'étend approximativement transversalement ou parallèlement à la direction d'avance de la bande transporteuse,
**caractérisé en ce que**
les dispositifs de fixation (6) étant réalisés pour fixer des denrées alimentaires (3) essentiellement plates et/ou en forme de bâtons dans une position inclinée d'au moins 45° jusqu'à la position verticale et s'appliquant sur la bande transporteuse avec un côté étroit.

2. Refroidisseur de denrées alimentaires selon la revendication 1, **caractérisé en ce que** les dispositifs de fixation (6) sont disposés à une distance les uns des autres qui est inférieure à l'étendue moyenne d'un corps moulé (3) à surgeler.

3. Refroidisseur de denrées alimentaires selon l'une quelconque des revendications 1 ou 2, **caractérisé en ce que** les dispositifs de fixation (6) sont disposés à une distance les uns des autres qui correspond à l'épaisseur d'un corps moulé (3) à surgeler plus une distance de 5 cm au plus, de préférence de 3 cm au plus, de préférence de 0,5 cm au plus.

4. Refroidisseur de denrées alimentaires selon l'une quelconque des revendications 1 à 3, **caractérisé en ce que** les dispositifs de fixation (6) sont appropriés pour supporter les corps moulés (3) dans une région qui présente un espacement du point le plus profond des corps moulés qui correspond à 50 à 100 %, de préférence à 60 à 75 % de la largeur ou de la hauteur des corps moulés.

5. Refroidisseur de denrées alimentaires selon l'une quelconque des revendications 1 à 4, **caractérisé en ce que** les dispositifs de fixation (6, 12) présentent des compartiments pour recevoir les corps de denrées alimentaires.

6. Refroidisseur de denrées alimentaires selon l'une quelconque des revendications 1 à 5, **caractérisé en ce qu'**un étage de prérefroidissement (13) pour le prérefroidissement ou la présurgélation des corps de denrées alimentaires (3) est prévu.

7. Procédé pour refroidir, notamment pour surgeler des denrées alimentaires essentiellement plates et/ou en forme de bâton sous forme de corps moulés (3) dans un refroidisseur de denrées alimentaires selon l'une quelconque des revendications 1 à 6, **caractérisé en ce que** l'on introduit les corps moulés (3) dans les dispositifs de fixation (6) dans une position inclinée d'au moins 45° jusqu'à la position verticale par rapport à la bande transporteuse (2) et **en ce qu'**on les fait passer à travers l'enceinte frigorifique (1).

8. Procédé selon la revendication 7, **caractérisé en ce que** les corps moulés (3) présentent déjà avant l'entrée dans l'enceinte frigorifique (1) une stabilité de forme suffisante.
